# EUROPEAN PATENT SPECIFICATION

(11) **EP 1 887 910 B1**
(45) Date of publication and mention of the grant of the patent: **16.06.2010**
(21) Application number: 06744763.1
(22) Date of filing: 24.05.2006
(51) Int. Cl.: A47B 47/04, F16B 12/46, A47B 96/20

(54) **ASSEMBLY BETWEEN A SIDE MEMBER AND A REAR PANEL OF A PIECE OF FURNITURE**
ANORDNUNG ZWISCHEN EINEM SEITENGLIED UND EINER RÜCKPLATTE EINES MÖBELSTÜCKS
DISPOSITIF D'ASSEMBLAGE ENTRE UNE PAROI LATERALE ET UN PANNEAU ARRIERE DE MEUBLE

(30) Priority: 27.05.2005 DK 200500773
(43) Date of publication of application: 20.02.2008
(73) Proprietor: Inter IKEA Systems B.V., 2616 LN Delft (NL)
(72) Inventor: ANDERSSON, Benny, 343 93 Älmhult (SE)
(74) Representative: Noergaard, Tage
(86) International application number: PCT/IB2006/001360
(87) International publication number: WO 2006/126071

(56) References cited:
- EP-A- 0 836 934
- DE-A1- 3 244 398
- DE-A1- 19 823 537
- DE-U- 1 812 390
- DE-U1-202004 019 882
- DE-U1-202005 010 758
- FR-A- 1 345 888
- FR-A- 1 592 553
- US-A1- 2005 229 531

## Description

### Technical Field

The invention relates to a combination of an assembly, a side member and a rear panel of a piece of furniture, the assembly being between the side member and the rear panel, wherein said assembly comprising a flange part of the rear panel and a locking slot in the side member, the flange part being inserted sidewards into the locking slot, the insertion being effected via a longitudinal slot at the access to the locking slot and the rear panel being secured to the side member by at least one part of the side member extending into at least one withdrawal slot in the rear panel and/or by at least one part of the rear panel extending into at least one withdrawal slot in the side member, said side member being made of a laminate consisting of a central interlayer and a panel at each side of the interlayer.

### Background Art

The German published specification No 3244398A1 discloses an assembly between a side member and a rear panel of e.g. a piece of furniture. Said assembly consists of a flange part of the rear panel, said flange part being inserted sideways into a locking slot in the side member, the insertion being effected via a longitudinal slot at the access to the locking slot. The rear panel is secured to the side member by at least one part of the side member extending into a least one withdrawal slot in the rear panel, and/or by at least one part of the rear panel extending into at least one withdrawal slot in the side member. A problem here is that this assembly is often made rather heavy to stand heavy and complex loads.

### Disclosure of Invention

The purpose of the present invention is to indicate a combination of the above type and which further provides an alternative construction for the side member, an alternative material for the interlayer, and an alternative material for the panel plates, and further provides a considerable stability without said construction being particularly heavy.

The combination according to the invention is characterized in that the interlayer of the side member is of light weight material, such as cellular material and has a thickness of 15-50 mm, while the panel plates of said side member are of chipboard or massive bond plate and each has a thickness of 15-22 mm. Such a combination has turned out to work efficiently in many situations as it can provide a considerable stability without being particularly heavy.

While FR-A-1592553 and EP-A-0836934 disclose a panel made of laminate, none of the available prior art documents discloses or suggests the approach suggested in the present application. To obtain the same combination as in the application, the assembly disclosed in DE 3244398A1 has to have not only a side member made of laminate of three layers but also to have an interlayer and panel plates made of a certain material and with a certain thickness. As well the material as the thickness have to correspond to the construction of the combination. Especially the material and the thickness of the panel plates have to support the rear panel and to offer an adequate locking possibility for the assembly slots in order to keep the assembly and consequently the furniture stable.

Besides, according to the invention the light weight material in the interlayer of the side member may be built up from thin HDF (high density fibreboard), MDF (medium density fibreboard), hardboard or a thin, preferably approx. 2.5 mm thick, massive bond plate. Thereby an especially stable combination is obtained.

Furthermore, according to the invention a strip of chipboard or massive wood may be placed at the outer areas of the interlayer, and at the centre of the interlayer a "Honey-comb" cell-like construction of culluloid fibres, preferably of liner quality may be placed. This embodiment has shown to be particularly strong in relation to the weight of the material.

According to the invention the locking slot of the side member - seen from a horizontal sectional view - may substantially have the shape of a trapeze with at least one tilted wall, and the flange part of the rear panel may have at least one tilted edge face with the same inclination or substantially the same inclination as a tilted wall in said trapeze, and the tilted edge face of the rear panel may abut said tilted wall. Thereby an increased stability of the assembly is obtained.

Finally, according to the invention the locking slot in the side member, into which the flange part of the rear panel is inserted, may be placed off said interlayer. Hereby an additional stabilisation of the flange part of the rear panel is obtained in relation to the side member.

### Brief Description of the Drawings

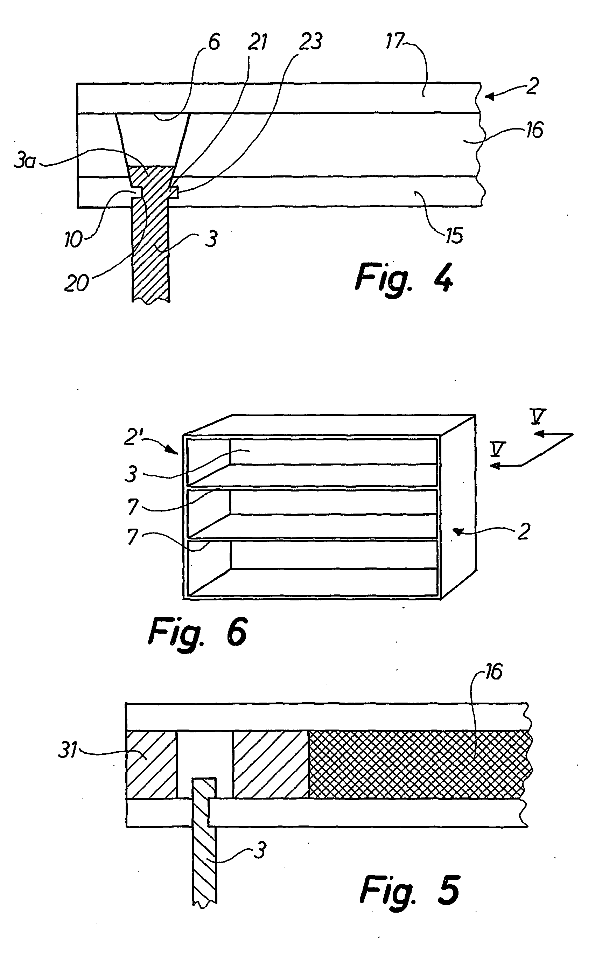

The invention is explained in detail below with reference to the drawings, in which
Fig, 1 shows - in a section along a plane V-V in Fig. 6 - an example of the combination, said combination comprising an assembly and a rear panel and a side member, the example being not covered by the the claims,
Fig. 2 - corresponding to Fig. 1 - first embodiment of the combination, where the part of the rear panel extending furthest into the locking slot in the side member has tilted walls,
Fig. 3 - corresponding to Fig. 1 - a second embodiment of the combination according to the invention, the rear panel having two projections, each of said projections cooperating with their respective withdrawal slot in the side member,
Fig. 4 - corresponding to Fig. 1 - a third embodiment of the combination according to the invention, where a projection on the side member at the left side of the combination extends into a withdrawal slot in the rear panel, and where a projection on the rear panel at the right side of the combination interacts with a withdrawal slot in the side member,
Fig. 5 - corresponding to Fig. 1 a fourth embodiment of a combination according to the invention, where an interlayer is built up from material with various structures, and
Fig, 6 shows a perspective and schematic view of a completed set of shelves including one or more combinations according to the invention; the cutting plane V-V is clearly shown.

### Best Modes for Carrying out the Invention

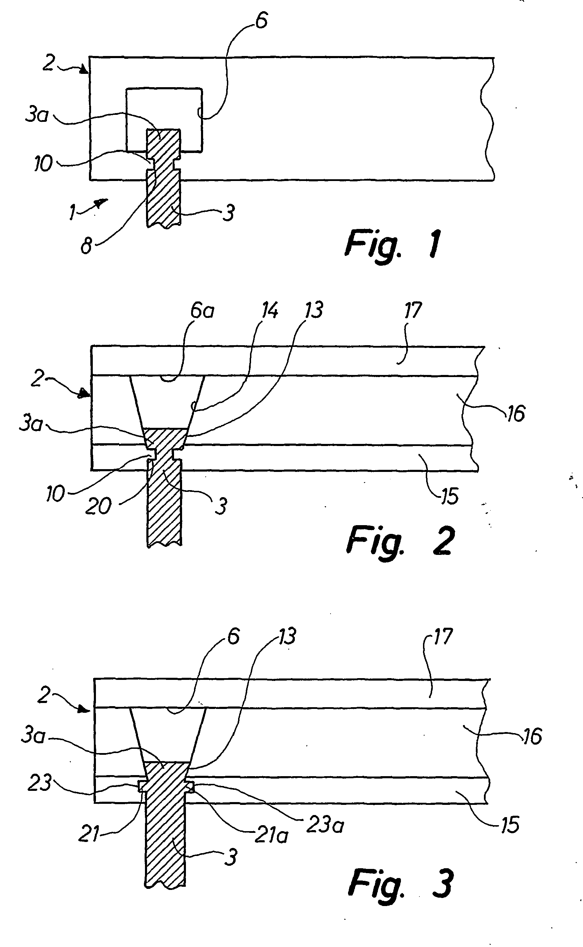

The combination shown in Fig. 1, not covered by the claims consists of an assembly (1), a side member 2 and a rear panel 3 (for instance in a piece of furniture, such as the set of shelves shown in Fig. 5). The assembly consists of a flange part 3a of the rear panel 3 inserted sidewards into a locking slot 6 in the side member 2. The insertion of the rear panel in the side member 2 is effected via a longitudinal groove 8 at the access to said locking slot 6. The rear panel 3 is secured to the side member 2 by at least a part 10 of said side member extending into a withdrawal slot 8 in the rear panel 3. Something similar applies at the other side of the rear panel 3.

As shown in Fig. 2, a locking slot 6a of the side member 2 may substantially have the shape of a trapeze, just as the flange part 3a of the rear panel may have at least one tilted edge face 13 with substantially the same inclination as a tilted wall 14 in said trapeze. A tilted edge part 13 of the rear panel may abut the tilted wall 14 of the locking slot 6a.

Fig. 2 shows how the side member 2 consists of a laminate built up of a central interlayer 16, a first panel plate 15 placed at one side of the interlayer16 and a second panel plate 17 placed at the other side of the interlayer 16. As it can be seen, the locking slot 6a, into which the flange part 3a of the rear panel 3 is inserted, may be placed substantially off said interlayer 16. At least the one edge part 10 at said receiving slot 8 may be inserted in a longitudinal slot 20 in the flange part 3a of the rear panel 3.

instead of one or more longitudinal slots 20 being placed in the rear panel 3, a projection 21, possibly two projections 21 and 21 a extending to the edge close to the rear plate - see Fig. 3 - may be formed, and said longitudinal projection or projections may be adapted to interact with a longitudinal withdrawal slot 23 - possibly withdrawal slots 23 and 23a - at the edge area of the first panel plate 15.

The interlayer 16 of the side member 2 is made of light weight material, for instance cellular material, and has a thickness of 15-50 mm. The panel plates 15 and 17 of the side member 2 may for instance be built up of chipboard or massive bond plate. Each panel plate 15, 17 has a thickness of 15-22 mm.

The light weight material in the interlayer 16 of the side member 2 may be built up from thin HDF (high density fibreboard), MDF (medium density fibreboard), hardboard or a thin, preferably approx. 2.5 mm thick, massive bond plate.

As shown in Fig. 4 the assembly between the rear panel 3 and the side member 2 may be provided in that for instance the right side of the rear panel 3 has a projection 21 extending into a withdrawal slot 23 in the panel plate 15 while at the left side of the assembly, a projection 10 is placed on the panel plate 15, said projection 10 extending into the longitudinal slot 20 in the rear panel 3.

As shown in Fig. 5 a strip 31 from chipboard or massive wood may be placed at the outer areas of the interlayer 16, and a "honeycomb" cell-like layer construction from celluloid fibre may be provided at the centre of the interlayer 16. Said construction is preferably of liner quality.

The combination according to the invention is particularly well suited for the use in sets of shelves, wardrobes or kitchen elements at least consisting of two side members and a rear panel as well as one or more shelves placed on top of each other. The combination according to the invention is included in at least one of the assemblies between the side members and the rear panel in said constructions.

As it appears the invention especially relates to the locking function between the rear panel and the side members in a piece of case furniture.

Specifically, the assembly in the inventive combination can be set up by providing a single slot 20 at one side of the rear panel 3 - said slot being approx, 1.5 mm ± 0.2 mm deep and 3.2 + 0.2 mm wide; alternatively a slot 20 can be provided at each side of the rear panel 3, said slots being approx. 1.0 ± 0.2 mm deep and 3.2 + 0.2 mm wide. The slots are provided lengthwise along the rear panel 3, for instance 2.0 mm from the edge of said rear panel.

The object of having slots 20 at each side of the rear panel 3 (see Fig. 1) is to make it possible that said rear panel may be turned 180°, if for instance both sides of the rear panel 3 - possibly just one side thereof - are provided with a pattern (e.g. a birch pattern on one side and a uniform white colour on the other side) - a customer will have an additional option with regard to the appearance of the piece of furniture.

Provided that there are slots 20 at both sides of the rear panel 3, the finished piece of furniture is more stable than if there is only one slot 20 in said rear panel.

On manufacturing a piece of furniture according to the invention, e.g. a set of shelves, the perpendicular locking slot 6a (see Fig. 2) is manufactured in the right side member 2 as well as in the left side member 2' (see Fig. 6) of the set of shelves. The rear panel 3 may be inserted sidewards in the slots 6 and 6a of the side members by means of the longitudinal slots 20 in the rear panel; said sidewards movement corresponds in Fig. 1 - 5 to a movement of the rear panel 3 perpendicular to the plane of the paper.

## Claims

1. A combination of an assembly (1), a side member (2) and a rear panel'(3) of a piece of furniture wherein said assembly consists of a flange part (3a) of the rear panel (3) inserted sidewards into a locking slot (6) in the side member (2), the insertion being effected via a longitudinal slot (20) at the access to the locking slot (6) and the rear panel (3) being secured to the side member (2) by at least one part (10) of the side member (2) extending into at least one withdrawal slot (20) in the rear panel (3) and/or by at least one part (21a) of the rear panel (3) extending into at least one withdrawal slot (23a) in the side member (2), said side member (2) being made of a laminate consisting of a central interlayer (16) and a panel (15, 17) at each side of the interlayer (16), **characterised in that** the interlayer (16) of the side member (2) is of light weight material such as cellular material and has a thickness of 15-50 mm, while the panel plates (15, 17) of said side member (2) are of chipboard or massive bond plate and each have a thickness of 15-22 mm.

2. A combination as claimed in claim 1, **characterised in that** the light weight material in the interlayer (16) of the side member (2) is built up from thin HDF (high density fibreboard), MDF (medium density fibreboard), hardboard or a thin, preferably approx. 2.5 mm thick, massive bond plate.

3. A combination as claimed in claims 1 or 2, **characterised in that** a strip (31) of chipboard or massive wood is placed at the outer areas (16a) of the interlayer (16) of the side member (2), and that a "Honeycomb" cell-like construction (16) of celluloid fibre, preferably of liner quality, is placed at the centre of said interlayer (16).

4. A combination as claimed in claims 1, 2 or 3, **characterised in that** the locking slot (6a) of the side member (2) - seen from a horizontal sectional view - substantially has the shape of a trapeze with at least one tilted wall (14), and that the flange part (3a) of the rear panel has at least one tilted edge face (13) with the same or substantially the same inclination as a tilted wall (14) in said trapeze, and that the tilted edge face (13) of the rear panel may abut said tilted wall (14).

5. A combination as claimed in any of the preceding claims, **characterised in that** the locking slot (6a) in the side member (2), into which the flange part (3a) of the rear panel (3) is inserted, is placed off said interlayer (16).

## Patentansprüche

1. Kombination einer Anordnung (1), eines Seitenbauteils (2) und eines Rückpaneels (3) eines Möbelstücks, bei der die Anordnung (1) aus einem seitwärts in einen Verriegelungsschlitz (6) im Seitenbauteil (2) eingeführten Flanschteil (3a) des Rückpaneels (3) besteht, wobei das Einführen über einen Längsschlitz (20) am Zugang des Verriegelungsschlitzes (6) durchgeführt wird und das Rückpaneel (3) durch zumindest einen sich in zumindest einen Entnahmeschlitz (20) im Rückpaneel (3) erstreckenden Teil (10) des Seitenbauteils (2) und/ oder durch zumindest einen sich in zumindest einen Entnahmeschlitz (23a) im Seitenbauteil (2) erstreckenden Teil des Rückpaneels (3) am Seitenbauteil (2) gesichert wird, wobei das Seitenbauteil (2) aus einem aus einer mittigen Zwischenlage (16) und einem Paneel (15, 17) an jeder Seite der Zwischenlage (16) bestehenden Verbund hergestellt ist,
**dadurch gekennzeichnet, dass**
die Zwischenlage (16) des Seitenbauteils (2) aus einem Leichtbaumaterial wie einem zellenförmigen Material aufgebaut ist und eine Dicke von 15-50 mm aufweist, während die Paneelplatten (15, 17) des Seitenbauteils (2) aus einem Spanbrett oder einer massiv verbundenen Platte aufgebaut sind und jeweils eine Dicke von 15-22 mm aufweisen.

2. Kombination gemäß Anspruch 1, **dadurch gekennzeichnet, dass** das Leichtbaumaterial in der Zwischenlage (16) des Seitenbauteils (2) aus dünnem HDF (Faserbrett mit hoher Dichte), MDF (Faserbrett mit mittlerer Dichte), Hartbrett oder einer dünnen, bevorzugt ungefähr 2,5 mm dicken, massiv verbundenen Platte ausgebaut ist.

3. Kombination gemäß Anspruch 1 oder 2, **dadurch gekennzeichnet, dass** ein Streifen (31) aus Spanholz oder massivem Holz an den Außengebieten (16a) der Zwischenlage (16) des Seitenbauteils (2) platziert ist, und dass ein "Honeyaomb"-zallenförmiger Aufbau (16) einer Zelluloidfaser, bevorzugt in Auskleidungsqualität, an der Mitte der Zwischenlage (16) platziert ist.

4. Kombination gemäß Anspruch 1, 2 oder 3, **dadurch gekennzeichnet, dass** der Verriegelungsschlitz (6a) des Seitenbauteils (2) - von einer horizontalen Schnittansicht betrachtet - im Wesentlichen die Gestalt eines Trapezes mit zumindest einer geneigten Wand (14) aufweiset, und dass der Flanschteil (3a) des Rückpaneels zumindest eine geneigte Kantenfläche (13) mit der gleichen oder im Wesentlichen der gleichen Steigung Wie die geneigte Wand (14) im Trapez aufweist, und dass die geneigte Eckenfläche (13) des Rückpaneels an der geneigten Wand (14) anliegen kann.

5. Kombination gemäß einem der vorangegangenen Ansprüche, **dadurch gekennzeichnet, dass** der Verriegelungsschlitz (6a) im Seitenbauteil (2), in den der Flanschteil (3a) des Rückpaneels (3) eingeführt ist, weg von der Zwischenlage (16) platziert ist.

## Revendications

1. Combinaison d'un assemblage (1), un élément latéral (2) et un panneau arrière (3) d'un meuble dans laquelle ledit assemblage consiste en une partie de rebord (3a) du panneau arrière (3) insérée vers les côtés dans une fente de blocage (6) dans l'élément latéral (2), l'insertion étant effectuée via une fente longitudinale (20) au niveau de l'accès à la fente de blocage (6) et le panneau arrière (3) étant fixé sur l'élément latéral (2) par au moins une partie (10) de l'élément latéral (2) s'étendant dans au moins une fente de retrait (20) dans le panneau arrière (3) et/ou par au moins une partie (21a) du panneau arrière (3) s'étendant dans au moins une fente de retrait (23a) dans l'élément latéral (2), ledit élément latéral (2) étant fait d'un stratifié consistant en un couche intermédiaire centrale (16) et un panneau (15, 17) au niveau de chaque côté de la couche intermédiaire (16), **caractérisée en ce que** la couche intermédiaire (16) de l'élément latéral (2) est faite d'un matériau de poids léger comme un matériau cellulaire et a une épaisseur de 15-50 mm, alors que les plaques de panneau (15, 17) dudit élément latéral (2) sont faites d'un panneau de particules ou d'une plaque collée massive et chacune a une épaisseur de 15-22 mm.

2. Combinaison selon la revendication 1, **caractérisée en ce que** le matériau de poids léger dans la couche intermédiaire (16) de l'élément latéral (2) est construit à partir d'HDF (Panneau de fibre de haute densité) fin, de HDF (Panneau de fibre de moyenne densité), ou de panneau dur ou d'une plaque collée massive fine de préférence d'approximativement 2,5 mm d'épaisseur.

3. Combinaison selon les revendications 1 ou 2, **caractérisée en ce qu'**une bande, (31) de panneau de particules ou de bois massif est placée au niveau des surfaces extérieures (16a) de la couche intermédiaire (16) de l'élément latéral (2), et **en ce qu'**une construction cellulaire en nid d'abeille (16) de fibre celluloïde, de préférence de qualité doublage, est placée au centre de ladite couche intermédiaire (16).

4. Combinaison selon les revendications 1, 2 ou 3, **caractérisée en ce que** la fente de blocage (6a) de l'élément latéral (2) - vue selon une vue en coupe horizontale - a sensiblement la forme d'un trapèze avec au moins une paroi inclinée (14), et **en ce que** la partie de rebord (3a) du panneau arrière a au moins une face de bord inclinée (13) avec la même ou sensiblement la même inclinaison qu'une paroi inclinée (14) dans ledit trapèze, et **en ce que** la face de bord inclinée (13) du panneau arrière peut venir en butée contre ladite paroi inclinée (14).

5. Combinaison selon l'une quelconque des revendications précédentes, **caractérisée en ce que** la fente de blocage (6a) dans l'élément latéral (2), dans laquelle la partie de rebord (3a) du panneau arrière (3) est insérée, est placée hors de ladite couche intermédiaire (16),
